# FASCICULE DE BREVET EUROPEEN

(11) **EP 2 281 456 B1**
(45) Date de publication et mention de la délivrance du brevet: **30.11.2016**
(21) Numéro de dépôt: 10305846.7
(22) Date de dépôt: 30.07.2010
(51) Int. Cl.: A01N 3/00, A23B 7/04

(54) **Procédé de préparation de pollen brut**
Verfahren zur Herstellung von rohem Pollen
Process for preparing raw pollen

(30) Priorité: 31.07.2009 FR 0955408; 05.08.2009 US 231489 P
(43) Date de publication de la demande: 09.02.2011
(73) Titulaire: STALLERGENES, 92160 Antony (FR)
(72) Inventeur: Lafargue, Marianne, 75002 Paris (FR)
(74) Mandataire: Lavoix

(56) Documents cités:
- FR-A- 1 388 298
- FR-A1- 2 881 649
- US-A1- 2006 053 686
- US-B2- 7 402 667

## Description

La présente invention concerne un procédé de préparation de pollen brut, apte à être utilisé pour la préparation d'extraits d'allergènes. Le procédé implique une congélation instantanée du pollen, dans un laps de temps inférieur ou égal à 10 minutes après récolte suivie d'un séchage du pollen congelé par sublimation jusqu'à ce que le pollen présente une activité de l'eau inférieure à 0,35 Aw..

La récolte de pollen, en particulier de pollen de graminées, herbacées ou arbres, est couramment effectuée à l'aide de machines de récolte de pollen qui tournent dans les champs pendant les mois de fin de printemps et d'été, sous des températures souvent élevées.

Les machines de récolte usuellement utilisées comportent un châssis motorisé sur lequel sont montés différents moyens parmi lesquels des moyens en forme de tête de récolte par aspiration des pollens raccordés à travers des moyens en forme de cyclone de séparation à des moyens formant un ventilateur d'aspiration. Ces différents moyens sont raccordés par un ensemble de gaines aérauliques et les moyens en forme de cyclone de séparation sont associés à des moyens en forme de trémie de récupération des pollens.

Une machine de récolte de ce type peut comporter deux circuits d'aspiration en parallèle comportant chacun des moyens en forme de ventilateur d'aspiration et des moyens en forme de cyclone de séparation, ceux-ci étant raccordés par des gaines et des raccords à des têtes de récolte des pollens agencées sous la forme d'une rampe placée à l'avant de la machine.

Cette rampe est alors portée par exemple par une fourche réglable en hauteur pour s'adapter à la hauteur des espèces à récolter et dont l'angle par rapport au sol est également réglable. Cette rampe peut de façon classique être réalisée sous la forme de plusieurs tronçons repliables de façon à permettre à cette machine de circuler sur route.

Ces moyens permettent à la fois d'assurer la séparation des pollens des plantes et la récupération de ceux-ci par aspiration.

Cependant, la mise en oeuvre d'une telle machine a révélé un certain nombre de problèmes.

En effet, des problèmes d'agglomération des pollens récoltés et de fermentation de ceux-ci ont été constatés.

La récolte de pollen est principalement effectuée dans des conditions de températures élevées. Malgré tout, le pollen collecté est très humide, et l'exposition à ces températures élevées pendant le temps de la récolte conduit à une agglomération du pollen qui rend extrêmement difficile la récupération du pollen. Avec les procédés de collecte de pollen mis en oeuvre avec les machines existantes, il est estimé que le pollen ensuite traité pour l'extraction d'allergènes ne représente qu'environ 5% du volume total collecté.

A ce problème d'agglomération s'ajoute un problème de fermentation, également lié aux températures élevées au moment de la récolte, avec pour conséquences une baisse de l'activité allergénique du pollen collecté, et l'augmentation non désirée de la flore microbiologique (bactéries, levures, moisissures) dans le produit collecté. Or, le pollen étant utilisé pour l'extraction d'allergènes destinés ensuite à la préparation de médicaments contre l'allergie ou de tests diagnostic, la charge microbiologique du produit doit rester inférieure à la charge maximale définie par la Pharmacopée européenne.

Le but de l'invention est donc de fournir une méthode de préparation de pollen brut évitant ces problèmes d'agglomération et de fermentation des pollens récoltés.

A cet effet, l'invention a pour objet un procédé de préparation de pollen brut qui implique une congélation instantanée du pollen au moment de sa récolte, avant que le pollen ne commence à s'agglomérer. Le pollen collecté, immédiatement soumis à une congélation instantanée, se présente alors sous forme d'une poudre congelée qui est ensuite séchée, par lyophilisation, de manière à fournir un pollen brut apte à être utilisé pour la préparation d'extraits d'allergènes.

Ainsi, le procédé de préparation de pollen brut selon l'invention comprend les étapes consistant à :
a) récolter du pollen ;
b) soumettre à une congélation instantanée le pollen récolté, dans un laps de temps inférieur ou égal à 10 minutes suivant sa récolte tel que le pollen ne commence pas à s'agglomérer. Ce procédé permet d'obtenir une poudre de pollen congelée.

Le laps de temps tel que le pollen ne commence pas à s'agglomérer, après la récolte du pollen, dépend des conditions de température et d'humidité au moment de la récolte du pollen. Un laps de temps adéquat peut être aisément déterminé par l'homme par exemple en observant l'état du pollen récolté. Typiquement, le pollen récolté peut être soumis à une congélation instantanée par exemple dans les 10 minutes, de préférence les 5 minutes, de préférence encore les 2 minutes qui suivent la récolte du pollen. Comme apparent pour l'homme du métier, ce laps de temps doit être respecté pour chacun des grains de pollen. Ainsi, chaque grain de pollen récolté est soumis à une congélation instantanée par exemple dans les 10 minutes, de préférence les 5 minutes, de préférence encore les 2 minutes qui suivent la récolte de ce grain de pollen.
c) sécher par sublimation le pollen congelé de l'étape b) jusqu'à ce que le pollen présente une activité de l'eau inférieure à 0,35 Aw.

En pratique, le pollen étant le plus usuellement récolté de manière continue pendant une ou plusieurs heures avec une machine de récolte, il n'est pas envisageable d'attendre la fin de la récolte pour soumettre le pollen à une congélation instantanée, sauf à interrompre régulièrement la récolte pour prélever le pollen récolté et le soumettre à une congélation instantanée sans attendre la fin la récolte.

Aussi, le procédé de préparation de pollen brut selon l'invention comprend les étapes consistant à :
a) récolter un grain de pollen ; et
b) soumettre le grain de pollen récolté à une congélation instantanée, dans un laps de temps inférieur ou égal à 10 minutes suivant sa récolte tel que le grain ne commence pas à s'agglomérer à d'autres grains de pollen récoltés, de sorte à obtenir une poudre de pollen congelée.
c) sécher par sublimation le pollen congelé de l'étape b) jusqu'à ce que le pollen présente une activité de l'eau inférieure à 0,35 Aw.
d) répéter les étapes a),b) et c) autant que nécessaire.

Ce mode de réalisation concerne également un procédé de préparation de pollen brut selon l'invention qui comprend les étapes consistant à :
a) récolter du pollen ;
b) immédiatement soumettre à une congélation instantanée le pollen récolté. Ce procédé permet d'obtenir une poudre de pollen congelée.

Pour la congélation instantanée, le pollen récolté est exposé à une température inférieure ou égale à -20°C, par exemple inférieure ou égale à -25°C, inférieure ou égale à -30°C, ou inférieure ou égale à -50°C. La température peut toutefois rester supérieure à -80°C, par exemple. Le grain de pollen frais présente une importante teneur en eau (environ 40%) et l'exposition à une température inférieure ou égale à -20°C conduit à une congélation instantanée de l'eau des grains de pollen, formant ainsi une poudre congelée. La congélation instantanée du pollen évite ainsi les problèmes de prise en masse du pollen liés à la combinaison du haut degré d'humidité du pollen collecté et des conditions de température élevées dans lesquelles la récolte du pollen est généralement mise en ouvre.

En outre, le développement microbiologique au sein du produit est bloqué par la congélation du pollen récolté.

Il a aussi été constaté que l'activité allergénique du pollen collecté instantanément congelé est supérieure à celle d'un pollen collecté sans congélation. Sans vouloir être lié par une hypothèse, la congélation pourrait limiter la dégradation des allergènes dans le pollen due à l'exposition à la chaleur, ou bien l'eau présente dans le produit collecté pourrait réaliser une extraction des allergènes à partir du pollen, le transfert des allergènes vers l'eau étant alors bloqué par la congélation.

La congélation instantanée peut être réalisée à l'aide d'un moyen de congélation tel que la glace carbonique ou l'azote liquide, ou tout autre moyen approprié, par mise en contact directe du pollen récolté avec le moyen de congélation, ou par mise en contact indirecte du pollen récolté avec le moyen de congélation, par exemple par récupération du pollen dans un réceptacle associé à des moyens de congélation et autour duquel est disposé un calorifugeage.

Le moyen le plus adéquat pour récolter et congeler instantanément le pollen, en particulier immédiatement après récolte, est d'utiliser une machine de récolte de pollens du type comportant un châssis motorisé sur lequel sont montés des moyens en forme de tête de récolte par aspiration des pollens, raccordés à travers des moyens en forme de cyclone de séparation à des moyens formant ventilateur d'aspiration, les moyens en forme de cyclone étant associés à des moyens en forme de trémie de récupération des pollens, caractérisée en ce qu'elle comporte des moyens de congélation des pollens récoltés dans les moyens en forme de trémie de récupération.

La machine de récolte de pollens comprend l'une ou plusieurs des caractéristiques suivantes :
- les moyens en forme de trémie de récupération comprennent une trémie proprement dite autour de laquelle est disposé un calorifugeage,
- les moyens en forme de trémie comprennent une trappe d'introduction de glace carbonique dans ceux-ci,
- les moyens en forme de trémie comprennent des moyens d'injection d'azote liquide dans ceux-ci,
- le fond des moyens en forme de trémie de récupération des pollens comporte une trappe de vidange et de collecte des pollens congelés,
- les moyens en forme de tête de récolte des pollens comprennent un ensemble de hottes d'aspiration présentant chacune une première partie de forme générale tronconique s'évasant entre une ouverture de raccordement au reste des circuits de la machine et une embase polygonale,
- l'embase polygonale est carrée,
- les hottes d'aspiration sont disposées sous la forme d'une rampe d'aspiration portée par une fourche réglable en position, hauteur et inclinaison, et fixée à l'avant de la machine, et
- elle comporte deux circuits d'aspiration en parallèle et raccordés l'un aux hottes de la partie gauche et l'autre aux hottes de la partie droite de la rampe d'aspiration, ces circuits comportant chacun des moyens en forme de cyclone de séparation, des moyens formant ventilateur d'aspiration et des moyens en forme de trémie de récupération des pollens.

La machine sera mieux comprise à l'aide de la description qui va suivre donnée uniquement à titre d'exemple et faite en se référant aux dessins annexés, sur lesquels :
- la figure 1 représente un schéma synoptique illustrant la structure d'une machine selon l'invention,
- la figure 2 illustre une tête d'aspiration entrant dans la constitution d'une telle machine,
- la figure 3 représente une hotte d'aspiration entrant dans la constitution d'une telle tête, et
- la figure 4 illustre les moyens en forme de trémie de récupération des pollens entrant dans la constitution d'une telle machine.

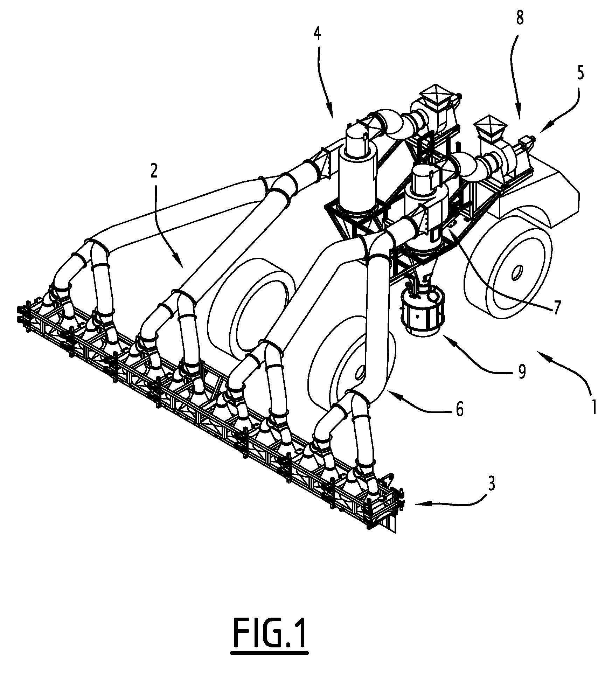

On a en effet illustré sur la figure 1, une machine de récolte de pollens qui est désignée par la référence générale 1.

En fait, cette machine comporte par exemple un châssis motorisé de type approprié, à l'avant duquel est disposée une fourche 2 de support d'une rampe 3 de têtes de récolte par aspiration des pollens.

Ces têtes seront décrites plus en détail par la suite et la rampe est réglable en position, c'est-à-dire en hauteur et en inclinaison.

En fait, les têtes correspondantes de la rampe placées à gauche et à droite de celle-ci, sont raccordées à des circuits d'aspiration en parallèle et désignés par les références générales 4 et 5 respectivement sur cette figure 1.

Chaque circuit tel que par exemple le circuit 5 comporte alors un ensemble de gaines de raccordement, telles que par exemple une gaine désignée par la référence générale 6, permettant de raccorder les têtes d'aspiration correspondantes à des moyens en forme de cyclone de séparation correspondants désignés par la référence générale 7.

Ces moyens en forme de cyclone de séparation 7 sont placés dans la partie intermédiaire de la machine et sont eux-mêmes raccordés par des gaines à des moyens en forme de ventilateur d'aspiration désignés par la référence générale 8 et placés à l'arrière de la machine.

A titre d'exemple, ces moyens en forme de ventilateur peuvent présenter un débit de 6.000 m³/heure pour une vitesse de rotation par exemple de 2.400 tours/minute. Chaque moyen de ventilation gère alors l'aspiration sur une moitié de la rampe 3 de têtes d'aspiration.

Les moteurs des moyens de ventilation peuvent par exemple être formés par des moteurs hydrauliques alimentés à partir d'une source d'énergie disponible sur le châssis. Les vitesses d'aspiration peuvent également être réglables depuis une cabine du châssis indépendamment pour chaque ventilateur.

On peut en effet utiliser une vanne proportionnelle à commande électrique pour ajuster le débit hydraulique dans les moteurs et donc commander la vitesse de rotation de ceux-ci.

Le flux d'air aspiré ainsi généré est transféré depuis la rampe de têtes d'aspiration jusqu'aux ventilateurs par un ensemble de gaines aérauliques souples. Cet ensemble de gaines est optimisé de façon à permettre d'éviter les dépôts de pollens sur les parois. Les longueurs des gaines sont optimisées et les zones de rétentions potentielles sont limitées au maximum.

Cet ensemble est complètement démontable et nettoyable pour permettre par exemple un changement de gaines entre chaque espèce de pollens récoltés.

Un tel ensemble permet d'obtenir une vitesse d'air d'aspiration au niveau du haut de chaque tête d'aspiration supérieur à 15 m/seconde par exemple.

Les moyens en forme de cyclone de séparation 7 permettent quant à eux de séparer les particules aspirées, c'est-à-dire les pollens plus les déchets divers, du flux d'air aspiré. Ces particules sont ensuite récupérées dans des moyens en forme de trémie de récupération associés à ces moyens en forme de cyclone.

L'un de ces moyens en forme de trémie de récupération est désigné par la référence générale 9 sur cette figure 1. Les dimensions des moyens en forme de cyclone sont optimisées de manière à permettre une séparation des pollens du flux d'air proche de 100 %.

Après séparation, les pollens tombent alors dans les moyens en forme de trémie de récupération qui, dans l'exemple illustré, sont placés sous chaque moyen en forme de cyclone de chaque côté du châssis de la machine.

Dans l'exemple de réalisation illustré, la rampe d'aspiration 3 comporte huit têtes d'aspiration raccordées par l'intermédiaire de gaines et de raccords correspondants à l'un des circuits d'aspiration décrits précédemment.

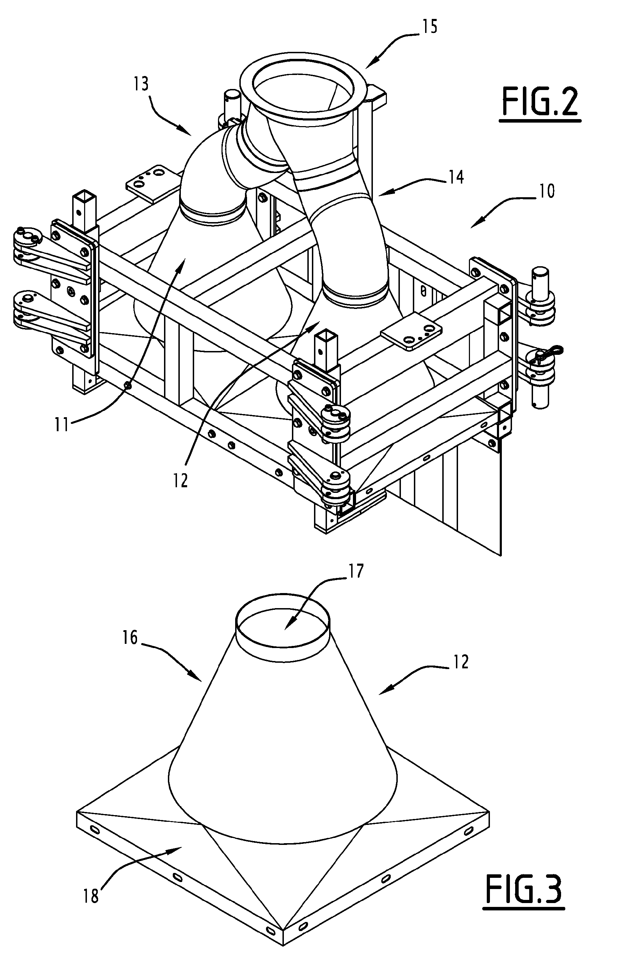

L'une de ces têtes d'aspiration est représentée plus en détail sur la figure 2.

Cette tête est désignée par la référence générale 10 et comporte dans l'exemple illustré deux hottes d'aspiration respectivement 11 et 12 associées l'une à l'autre et placées côte-à-côte.

Chaque hotte présente alors une extrémité ouverte raccordée par une gaine respective 13 et 14 à un raccord 15, celui-ci étant lui-même branché sur l'un des circuits d'aspiration décrits précédemment, tel que le circuit 5.

La conception des hottes a été optimisée du point de vue aéraulique, afin de permettre une vitesse d'aspiration minimale sur la surface la plus grande possible de celles-ci.

Une telle hotte est illustrée plus en détail sur la figure 3.

Cette hotte est par exemple la hotte désignée par la référence générale 12 et celle-ci comporte alors une portion tronconique désignée par la référence générale 16, s'étendant en s'évasant entre une ouverture 17 de raccordement par exemple à la gaine 14 et une embase polygonale 18 par exemple carrée.

Avec les valeurs données précédemment, on obtient avec une telle forme une vitesse d'aspiration supérieure à 1 m/seconde sur plus de 75 % de la surface de la hotte et en particulier de son embase.

Cette hotte améliore notablement l'efficacité de l'aspiration par rapport aux moyens d'aspiration existant dans l'état de la technique.

De plus, et afin d'améliorer encore l'efficacité de ces têtes d'aspiration, des moyens tels que par exemple des câbles, peuvent être placés à l'horizontale devant les hottes, ces moyens étant réglables en position pour secouer les plantes lors du passage de la machine, afin d'optimiser encore la libération des pollens par les plantes.

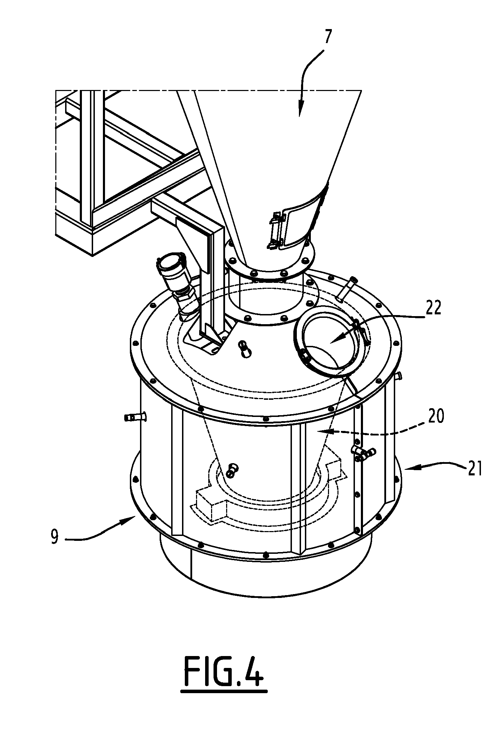

On a illustré sur la figure 4 un exemple de réalisation de moyens en forme de trémie de récupération des pollens.

Comme cela a été indiqué précédemment, des moyens de récupération des pollens comme par exemple les moyens désignés par la référence générale 9, sont placés sous les moyens en forme de cyclone correspondants tels que par exemple les moyens 7.

Dans la machine selon l'invention, ces moyens de récupération des pollens comprennent une trémie proprement dite désignée par la référence générale 20 autour de laquelle est placé un calorifugeage désigné par la référence générale 21.

A son extrémité supérieure, cette trémie 20 est raccordée au cyclone 7 et comporte par exemple une trappe 22 permettant d'introduire dans la trémie de la glace carbonique, afin de provoquer une congélation instantanée des pollens récoltés.

L'intérieur de la trémie est maintenu de préférence à une température inférieure ou égale à -20°C, par exemple inférieure ou égale à -25°C, inférieure ou égale à -30°C, ou inférieure ou égale à -50°C. La température peut toutefois rester supérieure à -80°C, par exemple.

L'introduction de cette glace carbonique dans la trémie peut être réalisée par exemple par un opérateur.

Il va de soi bien entendu que d'autres modes de réalisation de ces moyens de congélation des pollens peuvent être envisagés.

C'est ainsi par exemple que des moyens d'injection d'azote liquide peuvent également être prévus.

D'autres moyens encore peuvent être envisagés.

On notera également que le fond de la trémie 20 peut être muni de moyens de récupération des pollens ainsi congelés.

Différents modes de réalisation de ces moyens peuvent être envisagés, comme par exemple des moyens à cassettes, à tiroirs, etc ...

On notera également que la trémie 20 de récupération peut par exemple être équipée de moyens formant sonde de température et de moyens formant détecteur de niveau dont les informations de sortie sont transmises par exemple dans la cabine de la machine, afin de permettre par exemple à un opérateur de contrôler que les pollens récoltés sont bien congelés et que la trémie n'est pas pleine, pour déclencher éventuellement des actions correctives telles que par exemple l'ajout de glace carbonique ou la vidange des trémies, afin de récupérer les pollens.

Il a été constaté que l'opération de congélation des pollens récoltés dans la machine de récolte décrite ci-dessus permettait de résoudre les problèmes évoqués précédemment d'agglomération et de fermentation du pollen.

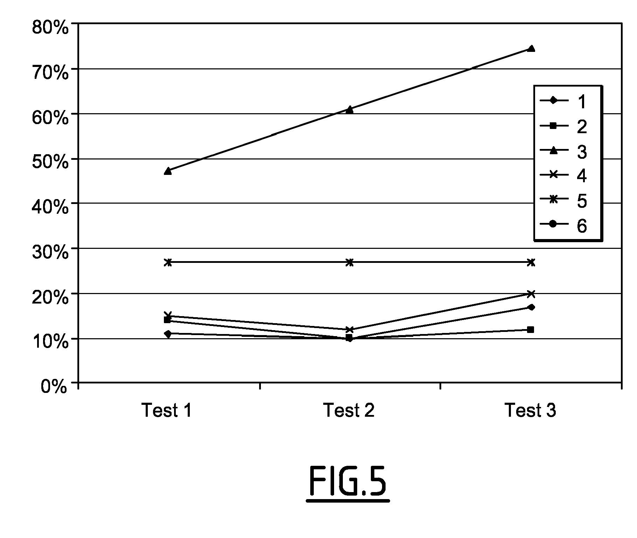

En effet, dans la trémie, le pollen se présente sous la forme d'une poudre congelée, qui reste sous cette forme tout au long de la récolte. Une fois la récolte terminée, le pollen congelé peut ensuite être récupéré sans avoir subi d'altération. Ainsi avec la machine de récolte décrite ci-dessus, la quantité de pollen ensuite utilisable pour l'extraction d'allergènes représente désormais jusqu'à 75% ou 85% du volume total de pollen collecté (voir Figure 5).

Les pollens collectés peuvent être des pollens de graminée, d'herbacée mais aussi des pollens d'arbre, tels que des pollens de dactyle, phléole des prés, flouve, ivraie, paturin, ambroisie, armoise, pariétaire officinale, plantain, frêne, olivier, chêne, platane, bouleau, cyprès, genévrier, thuyas, cèdres.

Selon le procédé de préparation de pollen brut selon l'invention, le pollen congelé est ensuite séché par sublimation pour fournir du pollen brut séché. Le pollen présente une activité de l'eau inférieure à 0,35 Aw.

L'activité de l'eau représente la pression de vapeur d'eau d'un produit humide sur la pression de vapeur saturante à la même température.

L'activité de l'eau est mesurée par un appareil de mesure d'activité de l'eau (étalonné).

Plusieurs techniques et appareils de séchage du pollen congelé ont en effet été testés : des étuves, étuves à vide, et un lyophilisateur. Or il s'est avéré que le séchage en étuve, même sous vide, ne permet pas d'évacuer l'eau de manière suffisante et la décongélation du pollen s'accompagne d'une prise en masse complète du produit. Le taux de pollen récupéré, ensuite utilisable pour l'extraction d'allergènes, ne représente désormais que 10 à 30% du volume total de pollen collecté.

L'utilisation d'un lyophilisateur, c'est-à-dire le séchage par sublimation, permet en revanche de récupérer jusqu'à 75% ou 85% des pollens collectés.

En effet, les inventeurs ont séché du pollen selon différentes techniques et ont comparé les rendements en pollen fini obtenus. Les résultats obtenus sont présentés sur la Figure 5 pour trois essais (tests) indépendants. Celle-ci représente le pourcentage de pollen de taille inférieure à 56 µm récupéré après tamisage sous aspiration, par rapport au pollen total présent dans l'échantillon. Les systèmes de séchage qui ont été utilisés sont les suivants :
- courbe 1 : étuve Eratis® avec système de plateaux
- courbe 2 : étuve Eratis® avec système Osmofilm®
- courbe 3 : lyophilisateur
- courbe 4 : sécheur
- courbe 5 : étuve à vide avec système de plateaux
- courbe 6 : étuve à vide avec système Osmofilm®

On remarque que grâce à la lyophilisation, le rendement du traitement du pollen brut en pollen fini est bien meilleur que celui d'un produit séché en étuve classique ou en étuve à vide.

Le séchage par sublimation est effectué directement sur le pollen congelé, sans qu'il soit nécessairement besoin d'abaisser sa température au préalable. Préférentiellement, le séchage par sublimation est effectué à la température de congélation du pollen, c'est-à-dire de préférence à une température inférieure ou égale à -20°C, par exemple inférieure ou égale à -25°C, inférieure ou égale à -30°C, ou inférieure ou égale à -50°C. La température peut rester supérieure à-80°C, par exemple. Il est toutefois possible dans le cadre du procédé selon l'invention d'abaisser la température du pollen congelé, par exemple de 10°C, ou de 20°C, ou davantage, avant sublimation.

Le séchage par sublimation peut être effectué à une pression inférieure ou égale à 70 Pa (700 µbars), par exemple inférieure ou égale à 50 000 Pa (500 µbars), inférieure ou égale à 30 Pa (300 µbars). Avantageusement, la pression peut être comprise entre 30 Pa (300 µbars) et 60 Pa (600 µbars), de préférence entre 40 Pa (400 µbars) et 50 Pa (500 µbars).

Le séchage par sublimation peut être réalisé en une ou plusieurs étapes, caractérisées chacune par des conditions de température et de pression données. Un séchage par sublimation en une seule étape est toutefois suffisant.

Le séchage par sublimation peut par exemple être effectué à une température comprise entre -20°C et -50°C, à une pression comprise entre 40 et 60 Pa. De préférence, le séchage effectué à une température comprise entre -20°C et -35°C à une pression comprise entre 40 et 55 Pa.

La durée du séchage est fonction du degré d'humidité du pollen au moment de sa récolte. L'étape de séchage par sublimation peut typiquement durer de 20 à 60 heures, par exemple de 24 à 50 heures, ou encore de 25 à 48 heures. La durée de la sublimation nécessaire pour obtenir un pollen présentant une activité de l'eau inférieure à 0,35 Aw peut être déterminée expérimentalement sur un échantillon. La durée du cycle de sublimation peut ensuite être ensuite appliquée au pollen congelé à lyophiliser, en vérifiant ensuite que le niveau d'activité de l'eau du produit sec est conforme à ce qui est attendu.

De préférence, le séchage est mis en oeuvre jusqu'à une valeur d'activité de l'eau supérieure à 0,05 Aw.

## Revendications

1. Procédé de préparation de pollen brut comprenant les étapes consistant à :
a) récolter du pollen ; et
b) soumettre à une congélation instantanée le pollen récolté, dans un laps de temps inférieur ou égal à 10 minutes suivant sa récolte tel que le pollen ne commence pas à s'agglomérer, de sorte à obtenir une poudre de pollen congelée.
c) sécher par sublimation le pollen congelé de l'étape b) jusqu'à ce que le pollen présente une activité de l'eau inférieure à 0,35 Aw.

2. Procédé selon la revendication 1, qui comprend les étapes consistant â :
a) récolter du pollen ; et
b) soumettre immédiatement le pollen récolté à une congélation instantanée, de sorte à obtenir une poudre de pollen congelée.
c) sécher par sublimation le pollen congelé de l'étape b) jusqu'à ce que le pollen présente une activité de l'eau inférieure à 0,35 Aw.

3. Procédé selon la revendication 1 ou 2, dans lequel la congélation instantanée du pollen récolté est réalisée par exposition du pollen à une température inférieure ou égale à -20°C.

4. Procédé selon l'une quelconque des revendications 1 à 3, dans lequel la congélation instantanée du pollen récolté est réalisée à l'aide de glace carbonique ou d'azote liquide.

5. Procédé selon l'une quelconque des revendications 1 à 4, dans lequel le pollen est récolté et soumis à une congélation instantanée à l'aide d'une machine de récolte de pollens du type comportant un châssis motorisé (1) sur lequel sont montés des moyens (3) en forme de tête de récolte par aspiration des pollens, raccordés à travers des moyens (7) en forme de cyclone de séparation à des moyens (8) formant ventilateur d'aspiration, les moyens (7) en forme de cyclone étant associés à des moyens (9) en forme de trémie de récupération des pollens, **caractérisée en ce qu'**elle comporte des moyens de congélation des pollens récoltés dans les moyens (9) en forme de trémie de récupération.

6. Procédé selon l'une quelconque des revendications 1 à 5, dans lequel le pollen est du pollen de graminée, du pollen d'herbacée, ou du pollen d'arbre.

7. Procédé selon l'une quelconque des revendications 1 à 6, dans lequel le séchage par sublimation est effectué à la température de congélation du pollen.

8. Procédé selon l'une quelconque des revendications 1 à 7, dans lequel le séchage par sublimation est effectué à une température inférieure ou égale à - 20°C.

9. Procédé selon l'une quelconque des revendications 1 à 8, dans lequel le séchage par sublimation est effectué à une pression inférieure ou égale à 70 Pa.

10. Procédé selon l'une quelconque des revendications 1 à 9, dans lequel le séchage par sublimation est effectué à une température comprise entre -20°C et -50°C, à une pression comprise entre 40 et 60 Pa.

## Patentansprüche

1. Verfahren zum Vorbereiten von Rohpollen, aufweisend die Schritte bestehend in:
a) Ernten des Pollens, und
b) Unterziehen des geernteten Pollens eines Schockgefrierens innerhalb eines auf dessen Ernte folgenden Zeitraums, der kleiner oder gleich 10 Minuten ist, so dass der der Pollen nicht damit beginnt, sich zu agglomerieren, um ein Pulver des gefrorenen Pollens zu erhalten,
c) Trocknen, mittels Sublimation, des in Schritt b) gefrorenen Pollens bis der Pollen eine Wasseraktivität kleiner 0,35 Aw aufweist.

2. Verfahren gemäß Anspruch 1, welches aufweist die Schritte bestehend in:
a) Ernten des Pollens, und
b) unverzügliches Unterziehen des geernteten Pollens eines Schockgefrierens, um ein Pulver des gefrorenen Pollens zu erhalten,
c) Trocknen, mittels Sublimation, des in Schritt b) gefrorenen Pollens bis der Pollen eine Wasseraktivität kleiner 0,35 Aw aufweist.

3. Verfahren gemäß Anspruch 1 oder 2, bei welchem das Schockgefrieren des geernteten Pollens realisiert wird durch Aussetzen des Pollens einer Temperatur, welche kleiner oder gleich -20°C ist.

4. Verfahren gemäß irgendeinem der Ansprüche 1 bis 3, bei welchem das Schockgefrieren des geernteten Pollens mittels Trockeneis oder Flüssigstickstoff realisiert wird.

5. Verfahren gemäß irgendeinem der Ansprüche 1 bis 4, bei welchem der Pollen geerntet wird und einem Schockgefrieren unterzogen wird mittels einer Pollenerntemaschine vom Typ, welcher ein motorisiertes Chassis (1) aufweist, an welchem Mittel (3) in Form eines Kopfs zur Ernte mittels Ansaugens des Pollens montiert sind, welche über Mittel (7) in Form eines Zyklons zur Trennung mit Mitteln (8), welche ein Sauggebläse bilden, verbunden sind, wobei die Mittel (7) in Form eines Zyklons verbunden sind mit Mitteln (9) in Form eines Trichters zur Rückgewinnung des Pollens, **gekennzeichnet dadurch, dass** sie Mittel zum Gefrieren des geernteten Pollens in den Mitteln (9) in Form eines Trichters zur Rückgewinnung aufweist.

6. Verfahren gemäß irgendeinem der Ansprüche 1 bis 5, bei welchem der Pollen Graspollen, Krautpollen oder Baumpollen ist.

7. Verfahren gemäß irgendeinem der Ansprüche 1 bis 6, bei welchem die Trocknung mittels Sublimation durchgeführt wird bei der Gefriertemperatur des Pollens.

8. Verfahren gemäß irgendeinem der Ansprüche 1 bis 7, bei welchem die Trocknung mittels Sublimation durchgeführt wird bei einer Temperatur, welche kleiner oder gleich -20°C ist.

9. Verfahren gemäß irgendeinem der Ansprüche 1 bis 8, bei welchem die Trocknung mittels Sublimation durchgeführt wird bei einem Druck, welcher kleiner oder gleich 70 Pa ist.

10. Verfahren gemäß irgendeinem der Ansprüche 1 bis 9, bei welchem die Trocknung mittels Sublimation durchgeführt wird bei einer Temperatur, welche zwischen -20°C und 50°C liegt, bei einem Druck, welcher zwischen 40 und 60 Pa liegt.

## Claims

1. Method for preparing raw pollen comprising the steps consisting of:
a) harvesting pollen; and
b) subjecting the harvested pollen to a flash freezing operation, in a period of time less than or equal to 10 minutes following its harvesting such that the pollen does not begin to agglomerate, in order to obtain a frozen pollen powder.
c) drying the frozen pollen of step b) by sublimation until the pollen has a water activity of less than 0.35 Aw.

2. Method according to claim 1, which comprises the steps consisting of:
a) harvesting pollen; and
b) immediately subjecting the harvested pollen to a flash freezing operation, in order to obtain a frozen pollen powder.
c) drying the frozen pollen of step b) by sublimation until the pollen has a water activity of less than 0.35 Aw.

3. Method according to claim 1 or claim 2, wherein the flash freezing of the harvested pollen is carried out by exposing the pollen to a temperature less than or equal to -20°-C.

4. Method according to any one of claims 1 to 3, wherein the flash freezing of the harvested pollen is carried out using dry ice or liquid nitrogen.

5. Method according to any one of claims 1 to 4, wherein the pollen is harvested and subjected to a flash freezing operation using a pollen harvesting machine of the type comprising a motorised chassis (1) on which there are mounted means (3) which are in the form of a head for harvesting pollen by means of suction and which are connected, via means (7) in the form of a separation cyclone, to means (8) forming a suction fan, the means (7) in the form of a cyclone being associated with means (9) in the form of a pollen recovery hopper, **characterised in that** it comprises means for freezing the pollen harvested in the means (9) in the form of a recovery hopper.

6. Method according to any one of claims 1 to 5, wherein the pollen is grass pollen, herbaceous plant pollen or tree pollen.

7. Method according to any one of claims 1 to 6, wherein the drying by sublimation is carried out at the freezing temperature of the pollen.

8. Method according to any one of claims 1 to 7, wherein the drying by sublimation is carried out at a temperature less than or equal to -20°-C.

9. Method according to any one of claims 1 to 8, wherein the drying by sublimation is carried out at a pressure less than or equal to 70 Pa.

10. Method according to any one of claims 1 to 9, wherein the drying by sublimation is carried out at a temperature of between -20°-C and -50°-C, at a pressure of between 40 and 60 Pa.
